(19) Europäisches Patentamt / European Patent Office / Office européen des brevets

(11) **EP 4 782 238 A1**

(12) **EUROPEAN PATENT APPLICATION**
published in accordance with Art. 153(4) EPC

(43) Date of publication:
**29.07.2026 Bulletin 2026/31**

(51) International Patent Classification (IPC):
*B60J 1/02* (2006.01)

(21) Application number: **24881669.6**

(22) Date of filing: **24.10.2024**

(86) International application number:
**PCT/CN2024/126912**

(87) International publication number:
**WO 2025/087305 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.10.2023 CN 202311384446**

(71) Applicant: Fuyao Glass Industry Group Co., Ltd.
**Fuqing, Fujian 350300 (CN)**

(72) Inventors:
• CHEN, An
  **Fuqing, Fujian 350300 (CN)**
• LI, Weijun
  **Fuqing, Fujian 350300 (CN)**
• GUO, Yong
  **Fuqing, Fujian 350300 (CN)**
• TAO, Juan
  **Fuqing, Fujian 350300 (CN)**

(74) Representative: **Mewburn Ellis LLP**
  **Aurora Building**
  **Counterslip**
  **Bristol BS1 6BX (GB)**

(54) **WINDSHIELD AND PREPARATION METHOD THEREFOR, AND VEHICLE**

(57) A windshield and a manufacturing method therefor, and a vehicle including the windshield are provided in the disclosure. The windshield includes an outer glass panel (131), an intermediate layer (133), and an inner glass panel (132). The windshield is provided with a weakened region. The weakened region includes a first weakened region (121). The first weakened region is configured to be tested by an adult-headform impactor. The first weakened region is configured to achieve a first head injury criterion (HIC) value HIC1 within 0 to 15 ms after a moment at which the first weakened region is impacted by the adult-headform impactor. The weakened region further includes a second weakened region (122). The second weakened region is configured to be tested by the adult-headform impactor. The second weakened region is configured to achieve a second HIC value HIC2 within 0 to 15 ms after a moment at which the second weakened region is impacted by the adult-headform impactor. HIC1 < HIC2 and HIC2 < 1000. By performing regional weakening on the windshield, when a pedestrian collides with the vehicle, the disclosure can provide both collision protection for the pedestrian and impact protection for a vehicle occupant, thereby improving a comprehensive safety performance of the windshield.

FIG. 3

**Description**

CROSS-REFERENCE TO RELATED APPLICATION(S)

This application claims priority to Chinese Patent Application No. 2023113844464, filed with the Chinese Patent Office on October 24, 2023, and entitled "WINDSHIELD AND MANUFACTURING METHOD THEREFOR, AND VEHICLE", the entire disclosure of which is hereby incorporated by reference.

TECHNICAL FIELD

This disclosure relates to the field of vehicle part technology, and particularly, to a windshield and a manufacturing method therefor, and a vehicle.

BACKGROUND

Since the advent of vehicles, vehicles have always been one of the important means of transportation in human society. With the development of the social economy and the iteration of the vehicle industry, collisions caused by road rights have become increasingly serious, and the number of collisions is still rising sharply. Therefore, demands for vehicle driving safety from people continue to increase, and demands for a safety performance of vehicle glass are also constantly rising. At present, in the pedestrian protection tests for driving safety, a windshield of a vehicle is not friendly to pedestrians. Once a pedestrian collides with the vehicle, after a head of the pedestrian collides with the windshield until the glass fractures, the head of the pedestrian is prone to collide with an instrument panel of the vehicle, causing secondary injury. By reducing a strength of the windshield, the injury to the head of the pedestrian can be reduced when the pedestrian collides with the vehicle, but the safety of a vehicle occupant cannot be guaranteed at the same time.

SUMMARY

A windshield is provided in the disclosure. The windshield can address the technical problem of being unable to reduce the injury to a head of a pedestrian while ensuring the safety of a vehicle occupant.

In a first aspect, a windshield is provided in the disclosure. The windshield includes an outer glass panel, an intermediate layer, and an inner glass panel. The outer glass panel has a first surface and a second surface opposite to each other. The inner glass panel has a third surface and a fourth surface opposite to each other. The second surface and the third surface face towards each other. The intermediate layer is connected between the second surface and the third surface.

The windshield is provided with a weakened region. The weakened region includes a first weakened region. The first weakened region is configured to be tested by an adult-headform impactor. The first weakened region is configured to achieve a first head injury criterion (HIC) value HIC1 within a time period of 0 to 15 milliseconds (ms) after a moment at which the first weakened region is impacted by the adult-headform impactor. The weakened region further includes a second weakened region. The second weakened region is configured to be tested by the adult-headform impactor. The second weakened region is configured to achieve a second HIC value HIC2 within a time period of 0 to 15 ms after a moment at which the second weakened region is impacted by the adult-headform impactor. HIC1 < HIC2 and HIC2 < 1000.

Optionally, the windshield is configured to be mounted on a vehicle including an instrument panel. The first weakened region is fractured by impact from the adult-headform impactor. The instrument panel is impacted by the adult-headform impactor after the first weakened region is fractured.

The first weakened region is configured to achieve a HIC value HIC11 within a time period of 0 to 5 ms after the moment at which the first weakened region is impacted by the adult-headform impactor. The first weakened region is configured to achieve a HIC value HIC12 within a time period of 5 to 15 ms after the moment at which the first weakened region is impacted by the adult-headform impactor. When HIC12 is less than or equal to HIC11, HIC1 is equal to HIC11. When HIC12 is greater than HIC11, HIC1 is equal to HIC12.

Optionally,

$$100 \leq HIC11 \leq 650.$$

Optionally,

$$200 \leq HIC11 \leq 500.$$

Optionally,

$$100 < \mathrm{HIC2} \leq 900.$$

Optionally, the windshield includes a light-transmitting region and a light-shielding region surrounding the light-transmitting region. A visible light transmittance of the light-transmitting region is greater than or equal to 70%. A visible light transmittance of the light-shielding region is less than or equal to 10%. Both the first weakened region and the second weakened region of the weakened region are located within the light-transmitting region.

Optionally, the light-shielding region includes a top light-shielding region, a left light-shielding region, a bottom light-shielding region, and a right light-shielding region.

The weakened region includes an upper boundary and a lower boundary opposite to each other, as well as a left boundary and a right boundary disposed opposite to each other between the upper boundary and the lower boundary.

A distance between the lower boundary of the weakened region and the bottom light-shielding region is x. A distance between the left boundary of the weakened region and the left light-shielding region is *m*. A distance between the right boundary of the weakened region and the right light-shielding region is *n*. A distance between the upper boundary of the weakened region and the top light-shielding region is *y*. *x* is less than or equal to 15 mm. *m* is less than or equal to 15 mm. *n* is less than or equal to 15 mm. *y* is less than or equal to 50 mm.

Optionally, a distance between a lower boundary of the first weakened region and the bottom light-shielding region is equal to *x*. A distance between a left boundary of the first weakened region and the left light-shielding region is equal to *m*. A distance between a right boundary of the first weakened region and the right light-shielding region is equal to *n*. A distance between an upper boundary of the first weakened region and the lower boundary of the first weakened region is *h*. *h* ranges from 100 mm to 300 mm.

A distance between an upper boundary of the second weakened region and the top light-shielding region is equal to *y*. A distance between a left boundary of the second weakened region and the left light-shielding region is equal to *m*. A distance between a right boundary of the second weakened region and the right light-shielding region is equal to *n*.

Optionally, a transition weakened region is disposed between a lower boundary of the second weakened region and the upper boundary of the first weakened region. An area of the transition weakened region is smaller than an area of the first weakened region. The transition weakened region is configured to be tested by the adult-headform impactor. The transition weakened region is configured to achieve a third HIC value HIC3 within a time period of 0 to 15 ms after a moment at which the transition weakened region is impacted by the adult-headform impactor. HIC3 is greater than HIC1 and less than HIC2.

Optionally, the weakened region further includes a third weakened region. The third weakened region is implemented as two third weakened regions. The two third weakened regions are respectively disposed on a left side and a right side of the weakened region.

The second weakened region is located between the two third weakened regions. The first weakened region is located below the second weakened region and the two third weakened regions.

A distance between an upper boundary of each of the two third weakened regions and the top light-shielding region is equal to *y*. A distance between a left boundary of the third weakened region at the left side and the left light-shielding region is equal to *m*. A distance between a right boundary of the third weakened region at the right side and the right light-shielding region is equal to *n*. A distance between a left boundary and a right boundary of each of the two third weakened regions is *d*. *d* ranges from 50 mm to 300 mm.

The third weakened region is configured to be tested by the adult-headform impactor. The third weakened region is configured to achieve a fourth HIC value HIC4 within a time period of 0 to 15 ms after a moment at which the third weakened region is impacted by the adult-headform impactor. HIC4 is greater than HIC1 and less than HIC2.

Optionally, the first weakened region is configured to cause the adult-headform impactor to have a first maximum resultant acceleration *a5* within a time period of 0 to 5 ms after the moment at which the first weakened region is impacted by the adult-headform impactor. The first weakened region is configured to cause the adult-headform impactor to have a second maximum resultant acceleration *a15* within a time period of 5 to 15 ms after the moment at which the first weakened region is impacted by the adult-headform impactor. *a5* is greater than *a15*.

Optionally, *a5* is less than or equal to 180 *g*, and *a15* is less than or equal to 100 *g*.

Optionally, within the time period of 0 to 15 ms after the moment at which the first weakened region is impacted by the adult-headform impactor, a time duration during which the adult-headform impactor has a resultant acceleration *a* greater than 50 g is less than or equal to 3 ms.

Optionally, a ratio of an area of the first weakened region to an area of the light-transmitting region is less than or equal to 1/3. A ratio of an area of the second weakened region to the area of the light-transmitting region is less than or equal to 2/3. The area of the first weakened region is smaller than the area of the second weakened region.

Optionally, a bending strength of the third surface is greater than a bending strength of the second surface, and/or a bending strength of the fourth surface is greater than the bending strength of the second surface.

Optionally, a thickness of part of the intermediate layer located in the first weakened region ranges from 0.38 mm to 0.6 mm.

Optionally, a moisture content of the intermediate layer ranges from 0.3% to 0.4% or from 0.6% to 0.7%.

Optionally, a concentration of tin oxide on the second surface is greater than a concentration of tin oxide on the first surface, and a concentration of tin oxide on the third surface is greater than a concentration of tin oxide on the fourth surface. Or the concentration of tin oxide on the first surface is greater than the concentration of tin oxide on the second surface, and the concentration of tin oxide on the fourth surface is greater than the concentration of tin oxide on the third surface.

Optionally, a ratio of a thickness of the outer glass panel to a thickness of the inner glass panel is greater than or equal to 0.75 and less than 1.

Optionally, a weakening coating is further provided on at least one of the second surface, the third surface, and the fourth surface. The weakening coating covers at least the first weakened region.

In a second aspect, a manufacturing method for the windshield is provided in the disclosure. The manufacturing method begins with operations at step 1.

At step 1, a curved outer glass panel and a curved inner glass panel are provided. The outer glass panel has the first surface and the second surface opposite to each other. The inner glass panel has the third surface and the fourth surface opposite to each other.

At step 2, the intermediate layer is provided. The outer glass panel, the intermediate layer, and the inner glass panel are sequentially stacked to form a laminated glass structure.

At step 3, the laminated glass structure is heated, vacuumized and/or applied with pressure to obtain the windshield. The windshield has the weakened region. The weakened region includes the first weakened region and the second weakened region.

Optionally, part of the outer glass panel and/or part of the inner glass panel located in the weakened region is weakened by at least one of the following methods.

(1) An internal flaw is introduced between the first surface and the second surface by a laser weakening method.

(2) An internal flaw is introduced between the third surface and the fourth surface by the laser weakening method.

(3) A microcrack is formed on the second surface by a physical-friction weakening method.

(4) A fractured line is formed on the second surface by a chemical-etching weakening method.

Optionally, the curved outer glass panel and the curved inner glass panel are obtained by performing a heating and softening process, a bending process, and an annealing process on flat glass. The heating and softening process, the bending process, and the annealing process satisfy at least one of the following conditions.

(1) A heating temperature ranges from 660°C to 750°C during the heating and softening process.

(2) A convection heating method is adopted to soften the flat glass during the heating and softening process.

(3) The convection heating method and a radiant heating method are both adopted to soften the flat glass during the heating and softening process.

(4) A surface of the flat glass with a lower concentration of tin oxide faces a heating element during the heating and softening process.

(5) A heating and softening time for the outer glass panel is longer than a heating and softening time for the inner glass panel during the heating and softening process.

(6) A temperature of a bending mold for bending the flat glass is greater than or equal to 500°C during the bending process.

(7) A blowing pressure applied to the outer glass panel is lower than a blowing pressure applied to the inner glass panel during the annealing process.

(8) An annealing time for the outer glass panel is longer than an annealing time for the inner glass panel during the annealing process.

Optionally, before the laminated glass structure is formed, the intermediate layer undergoes a humidity conditioning treatment or a stretching treatment. The moisture content of the intermediate layer after the humidity conditioning treatment ranges from 0.3% to 0.4% or from 0.6% to 0.7%. A thickness of the intermediate layer located in the first weakened region after the stretching treatment ranges from 0.38mm to 0.6mm.

In a third aspect, a vehicle is provided in the disclosure. The vehicle includes an instrument panel and the aforementioned windshield. The instrument panel is disposed adjacent to a lower side of the windshield.

The technical solutions of the disclosure have the following significant beneficial effects.

In the disclosure, the windshield includes the outer glass panel, the intermediate layer, and the inner glass panel. The outer glass panel has the first surface and the second surface opposite to each other. The inner glass panel has the third surface and the fourth surface opposite to each other. The second surface and the third surface face towards each other. The intermediate layer is connected between the second surface and the third surface. The windshield is provided with the weakened region. The weakened region includes the first weakened region. The first weakened region is configured to be tested by the adult-headform impactor. The first weakened region is configured to achieve the first HIC value HIC1 within a time period of 0 to 15 milliseconds (ms) after a moment at which the first weakened region is impacted by the adult-headform impactor. The weakened region further includes the second weakened region. The second weakened region is configured to be tested by the adult-headform impactor. The second weakened region is configured to achieve the second HIC value HIC2 within a time period of 0 to 15 ms after a moment at which the second weakened region is impacted by the adult-headform impactor. HIC1 < HIC2 and HIC2 < 1000. In the disclosure, by performing regional weakening on the windshield, region-specific control on the HIC value is achieved for different regions. Therefore, when a pedestrian collides with the vehicle, the first weakened region can reduce the injury to a head of the pedestrian. At the same time, since a HIC value achieved by the second weakened region of the windshield is less than 1000, and the HIC value achieved by the second weakened region is greater than a HIC value corresponding to the first weakened region, the windshield can not only protect the head of the pedestrian, but can also provide impact protection for the vehicle occupant. That is to say, by performing regional weakening on the windshield, the disclosure provides both collision protection for the pedestrian and impact protection for the vehicle occupant, thereby improving a comprehensive safety performance of the windshield.

BRIEF DESCRIPTION OF THE DRAWINGS

To describe the technical solutions of implementations of the disclosure more clearly, the following will briefly introduce the accompanying drawings required for illustrating the implementations. Apparently, the accompanying drawings in the following description are merely some implementations of the disclosure, and a person of ordinary skill in the art may still derive other drawings from these accompanying drawings without creative efforts.

FIG. 1 is a partial schematic view of a vehicle provided by an implementation of the disclosure.
FIG. 2 is a schematic view of a possible head-injury-criterion-related curve in the related art.
FIG. 3 is a schematic view of a windshield provided by an implementation of the disclosure.
FIG. 4 is a schematic cross-sectional view of FIG. 3 taken along Line I-I.
FIG. 5 is a schematic view of a head-injury-criterion-related curve provided by an implementation of the disclosure.
FIG. 6 is a schematic view of a windshield provided by another implementation of the disclosure.
FIG. 7 is a schematic view of a windshield provided by yet another implementation of the disclosure.
FIG. 8 is another schematic cross-sectional view of FIG. 3 taken along Line I-I.
FIG. 9 is a schematic flowchart of a manufacturing method for a windshield provided by an implementation of the disclosure.
FIG. 10 is a schematic top view of a vehicle provided by an implementation of the disclosure.

DETAILED DESCRIPTION

The following clearly and fully describes the technical solutions of implementations of the disclosure with reference to the accompanying drawings in implementations of the disclosure. Apparently, the described accompanying drawings are merely a part of the implementations of the disclosure. All other accompanying drawings obtained by a person of ordinary skill in the art based on the embodiments of the disclosure without creative efforts shall fall within the scope of protection of the disclosure.

A windshield is an essential component of a vehicle. With good optical and mechanical properties, the windshield can, to a certain extent, ensure driving and riding safety of people, and can also be one of key parts for pedestrian protection. A "pedestrian" may refer to any type of vulnerable road users (VRUs), for example, a person on-foot or a person on a bicycle. When a pedestrian collides with the vehicle, a body of the pedestrian is usually close to a vehicle body. During most pedestrian-vehicle collisions, a front of the vehicle (e.g., a front bumper or a grille) first collides with the pedestrian, and the body of the pedestrian wraps around a front shape of the vehicle (e.g., a shape defined by a bumper, a hood or a bonnet, and a front windshield). Therefore, there is a high probability that a head of the pedestrian may strike a region where the windshield is located. The severity and location of impact of pedestrian-vehicle collisions are determined by many factors, including a shape of the vehicle and a height of the pedestrian.

In the related art, the Chinese new car assessment programme (hereinafter referred to as C-NCAP) stipulates that a pedestrian protection test is classified into a head test and a leg test. In a C-NCAP pedestrian protection test, for a vehicle model with a relatively low posture or a relatively low front overhang, a test point may be on the windshield. The head test is related to the windshield, and a report of the head test usually uses a head injury criterion (HIC) value to represent head injury.

A formula for calculating the HIC value is as follows:

$$HIC = \left[ \frac{1}{t_2 - t_1} \int_{t_1}^{t_2} a\, dt \right]^{2.5} (t_2 - t_1)$$

In the above formula, $t_1$ and $t_2$ are any two moments when the vehicle collides with the pedestrian, $t_2 - t_1 \leq 15\text{ms}$, and $a$ is a resultant acceleration.

In general, for head model experiments, a hydrogen-induced cracking value achieved by a headform test region cannot be greater than 1700, a HIC value achieved by at least two-thirds of the headform test region cannot be greater than 1000, and a HIC value achieved by at least half of a child-headform test region cannot be greater than 1000. Therefore, a general requirement for the front windshield is that a HIC value achieved by the front windshield cannot be greater than 1000.

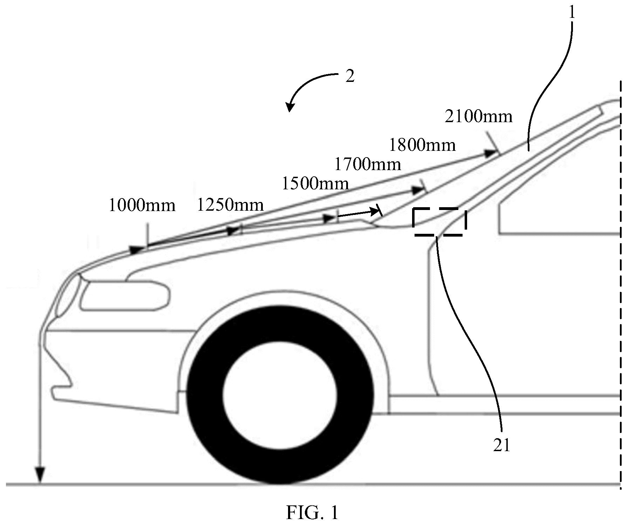

A flexible tape measure is used to wrap around a front structure of a vehicle 2 within a longitudinal vertical plane of the vehicle. A geometric trajectory formed by one end of the flexible tape measure on an outer surface of the front structure of the vehicle 2 is a wrap around distance (WAD) of a contact point of a body of a traffic-accident participant, as illustrated in FIG. 1. That is to say, the WAD is used to determine a region where a head impact may occur during a pedestrian-vehicle collision. A region bounded by a 1700 mm WAD and a 2100 mm WAD is an adult-headform collision region. The region bounded by the 1700 mm WAD and the 2100 mm WAD may include at least part of a windshield 1, and particularly, a lower part of the windshield 1. As can be seen from FIG. 1, a vehicle-mounted instrument panel (IP) 21 is located below a region of the windshield 1 bounded by the 1700 mm WAD and a 1800 mm WAD. During a collision between the pedestrian and the vehicle 2, when a pedestrian head impact point is located within the region of the windshield 1 bounded by the 1700 mm WAD and the 1800 mm WAD, after the head of the pedestrian first contacts the windshield 1 until the windshield 1 fractures, the windshield 1 exerts the first impact on the head of the pedestrian; and after the windshield 1 fractures, the head of the pedestrian continues to strike the vehicle-mounted instrument panel 21, and the instrument panel 21 exerts the second impact on the head of the pedestrian, causing secondary injury. That is to say, for the windshield 1, the region of the windshield 1 bounded by the 1700 mm WAD and the 1800 mm WAD is a region with the highest risk of head injury. Therefore, the requirement that a HIC value achieved by the overall windshield cannot be greater than 1000 is not very friendly to the pedestrian.

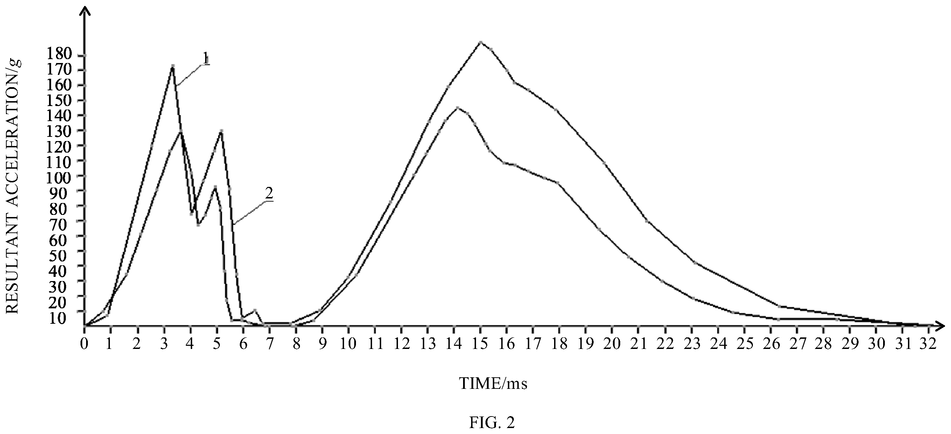

Reference is further made to FIG. 2, where FIG. 2 is a schematic view of a possible head-injury criterion-related-curve in the related art. As illustrated in FIG. 2, based on a resultant acceleration within a time period from when the vehicle 2 collides with the pedestrian to the end of the collision, a curve diagram of a pedestrian HIC value can be drawn. An ordinate of the curve diagram represents a value of the resultant acceleration, in the unit of $g$, and an abscissa of the curve diagram represents a time duration after the pedestrian collides with the vehicle 2, in the unit of milliseconds (ms). Curve 1 and Curve 2 respectively correspond to two curves illustrating pedestrian HIC values when two windshields 1 with different strengths are mounted on the vehicle 2. It can be seen from both Curve 1 and Curve 2 that, when the pedestrian collides with the region bounded by the 1700 mm WAD and the 1800 mm WAD illustrated in FIG. 1, there are two times of impacts. That is, during the first impact, within a time period of 6.5 ms from the contact of the head of the pedestrian with the windshield 1 to the fracturing of the windshield 1, since the windshield 1 is a laminated glass, as illustrated in FIG. 2, there are two peaks within the aforementioned 6.5 ms. The two peaks are two wave peaks, respectively generated by the fracturing of the outer glass panel and the inner glass panel. During the second impact, as illustrated in FIG. 2, the head of the pedestrian strikes the instrument panel 21 within a time period of 6.5 ms to 30.5 ms after a moment at which the head of the pedestrian makes contact with the windshield 1, and the second wave peak is generated at around 15 ms after the head of the pedestrian makes contact with the windshield 1. Moreover, the height of the second wave peak is higher than the height of the first wave peak, indicating that a HIC value generated by the contact of the head of the pedestrian with the instrument panel 21 is greater than a HIC value generated by the contact of the head of the pedestrian with the windshield 1.

Based on the formula for calculating the HIC value and FIG. 2, it can be concluded that, an area bounded by the curve and the abscissa illustrated in FIG. 2 is a HIC value. Therefore, how to reduce the area bounded by the curve and the abscissa is particularly important, that is, how to reduce an integral of the first impact injury, to lower the wave peak of the second impact, and to reduce a curve integral within 15 ms after the collision occurs are particularly important.

In the related art, one measure taken to optimize the front windshield is to reduce a HIC value achieved by the overall front windshield to less than 650, or even less than 550. However, such a measure does not satisfy actual safety requirements. In addition to providing collision protection for pedestrians, the front windshield is further required to provide impact protection for vehicle occupants inside the vehicle. Simply reducing the HIC value achieved by the overall front windshield cannot simultaneously satisfy the aforementioned protection requirements for both external and internal collisions.

Therefore, it is necessary to provide a windshield to address the above problems.

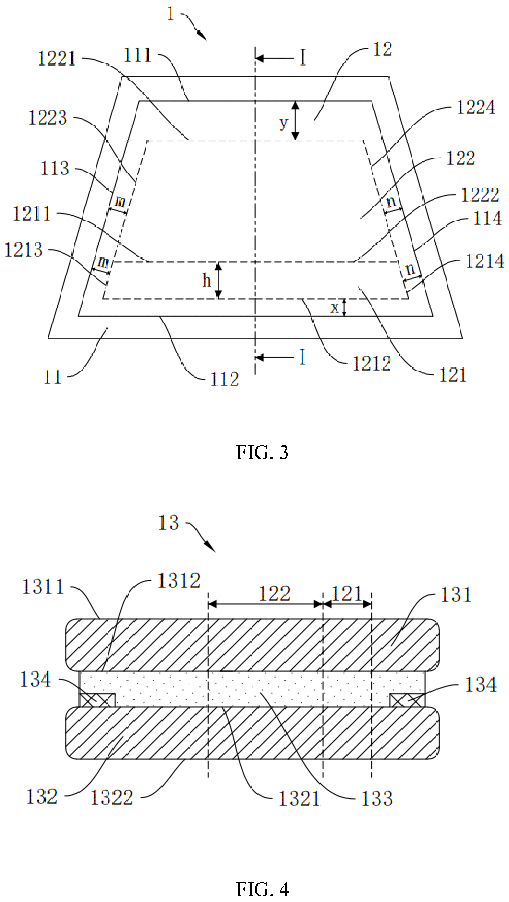

A windshield 1 is provided in the disclosure. Reference is made to FIG. 3, where FIG. 3 is a schematic view of the windshield provided by an implementation of the disclosure. The windshield 1 includes a light-shielding region 11 and a light-transmitting region 12. The light-transmitting region 12 is located within a central region of the windshield 1 and has a relatively high visible light transmittance that satisfies safety standards. The visible light transmittance of the light-transmitting region 12 is greater than or equal to 70%. The light-shielding region 11 is disposed around the windshield 1 and surrounds the light-transmitting region 12, and the visible light transmittance of the light-transmitting region 12 is greater than or equal to 70%. A visible light transmittance of the light-shielding region 11 is relatively low, and the visible light transmittance of the light-shielding region 11 is less than or equal to 10%. The light-shielding region 11 is used to shield and protect components inside the vehicle, preventing the components inside the vehicle from aging and being damaged due to direct sunlight, so as to improve service life of the components inside the vehicle. At the same time, the light-shielding region 11 can further block the components inside the vehicle to ensure overall beauty from external observation. Preferably, the visible light transmittance of the light-shielding region 11 is less than or equal to 5%, more preferably, is less than or equal to 1%, further preferably, is less than or equal to 0.5%, and even, is nearly equal to 0, that is, opaque.

That is to say, through the light-transmitting region 12, an occupant of the vehicle 2 can observe an external environment outside the vehicle 2. At the same time, the light-transmitting region 12 of the windshield 1 is used to protect the safety of the vehicle occupant. For example, the light-transmitting region 12 can block debris outside the vehicle 2 from flying into the vehicle and injuring the vehicle occupant, or can prevent the vehicle occupant from being ejected from the vehicle due to collisions, etc. Therefore, the light-transmitting region 12 of the windshield 1 needs to have a certain strength.

It can be noted that when the windshield 1 is applied to the vehicle 2, under normal circumstances, the windshield 1 serves as the front windshield of the vehicle 2 and is mounted at the front of the vehicle 2 in a traveling direction of the vehicle 2. In the disclosure, the windshield 1 is mounted on the vehicle 2 including the instrument panel 21, as illustrated in FIG. 1. The windshield 1 and the instrument panel 21 are disposed with an intersection angle, which is basically equal to an installation angle of the windshield 1. The installation angle of the windshield 1 refers to an angle between the windshield 1 and a horizontal plane when the windshield is in an installation state, representing an inclination degree of the windshield 1. The installation angle usually ranges from 18° to 45°, such as 25°, 30°, 35°, 40°, etc.

In some embodiments, the instrument panel 21 is provided with a head-up display (HUD) projector (not illustrated in the accompanying drawings). The HUD projector can project information to-be-displayed onto the windshield 1. Light projected from the HUD projector enters eyes of a driver after being reflected or diffracted by the windshield 1, so that the driver can view required driving information, road condition information and even entertainment information without lowering the head. In other embodiments, the instrument panel 21 is provided with a front passenger airbag (not illustrated in the accompanying drawings). The front passenger airbag can pop out from the instrument panel 21 at a moment of a vehicle collision accident, thereby protecting the safety of the vehicle occupant.

Specifically, reference is further made to FIG. 4, where FIG. 4 is a schematic cross-sectional view of FIG. 3 taken along Line I-I. The windshield 1 has a laminated glass 13 structure, which specifically includes an outer glass panel 131, an inner glass panel 132, and an intermediate layer 133. The intermediate layer 133 is disposed between the inner glass panel 132 and the outer glass panel 131, and the intermediate layer 133 is used to bond the inner glass panel 132 and the outer glass panel 131. Specifically, the outer glass panel 131 has a first surface 1311 and a second surface 1312 opposite to each other. The inner glass panel 132 has a third surface 1321 and a fourth surface 1322 opposite to each other. The second surface 1312 and the third surface 1321 face towards each other. The intermediate layer 133 is disposed between the second surface 1312 and the third surface 1321. The outer glass panel 131, the intermediate layer 133, and the inner glass panel 132 are processed through vehicle glass manufacturing process to form the windshield 1 having the laminated glass 13 structure. The windshield 1 can satisfy usage requirements stated in Chinese standard GB9656, as well as relevant standards of Europe, the United States, and other countries.

When the windshield 1 is mounted on the vehicle 2, the outer glass panel 131 is located on the outside of the vehicle 2, and the first surface 1311 is an outer surface of the windshield 1 exposed outside the vehicle; the inner glass panel 132 is located on the inside of the vehicle 2, and the fourth surface 1322 is an inner surface of the windshield 1 exposed inside the vehicle.

The outer glass panel 131 is clear glass or tinted glass. A thickness of the outer glass panel 131 ranges from 0.7 mm to 4 mm. A visible light transmittance of the outer glass panel 131 is greater than 70%. The inner glass panel 132 is clear glass or tinted glass. A thickness of the inner glass panel 132 ranges from 0.7 mm to 4 mm. A visible light transmittance of the inner glass panel 132 is greater than 70%. The total iron content (calculated as $Fe_2O_3$) of the clear glass is less than or equal to 0.1%, even less than or equal to 0.05%, and further less than or equal to 0.01%. The visible light transmittance of the clear glass ranges from 80% to 95%. The total iron content (calculated as $Fe_2O_3$) of the tinted glass ranges from 0.1% to 0.8%, even from 0.1% to 0.5%, and a visible light transmittance of the tinted glass ranges from 75% to 90%. For example, the outer glass panel 131 may be a 2.1 mm-thick clear glass with a visible light transmittance of 89%. The inner glass panel 132 may be a 1.6 mm-thick green glass with a visible light transmittance of 83%, or a 2.1 mm-thick green glass with a visible light transmittance of 80%.

The intermediate layer 133 is a transparent thermoplastic polymer film or a tinted thermoplastic polymer film, and the thickness of the intermediate layer 133 ranges from 0.38 mm to 2.28 mm. For example, the thickness of the intermediate layer 133 may be, but is not limited to, 0.38 mm, 0.76 mm, 1.14 mm, 1.52 mm, 1.9 mm, 2.28 mm, or any other values between 0.38 mm and 2.28 mm. The material of the thermoplastic polymer film may include one or more selected from the group consisting of polyvinyl butyral (PVB), polyurethane (PU), ethylenevinyl acetate copolymer (EVA), and ionic polymer (e.g., SentryGlas Plus (SGP)). When the intermediate layer 133 is the transparent thermoplastic polymer, a visible light transmittance of the transparent thermoplastic polymer is greater than or equal to 80%. For example, the visible light transmittance of the intermediate layer 133 may be, but is not limited to, 80%, 85%, 90%, 95%, etc. When the intermediate layer 133 is the tinted thermoplastic polymer film, a visible light transmittance of the tinted thermoplastic polymer film is greater than 70%. For example, the visible light transmittance of the intermediate layer 133 may be, but is not limited to, 75%, 80%, 85%, 90%, etc. The tinted thermoplastic polymer film may be a gray thermoplastic polymer film, a green thermoplastic polymer film, or a blue thermoplastic polymer film.

As illustrated in FIG. 4, the windshield 1 further includes a shielding layer 134. The shielding layer 134 is usually formed by disposing ceramic ink or ultraviolet ink on the second surface 1312 in a surrounding manner through screen printing, ink-jet printing, etc., and followed by performing curing or high-temperature sintering treatment. The shielding layer 134 is disposed at a periphery of the second surface 1312. It can be understood that, the shielding layer 134 may be located only on the third surface 1321, or only on the fourth surface 1322, or on both the second surface 1312 and the fourth surface 1322, or on both the second surface 1312 and the third surface 1321, or on both the third surface 1321 and the fourth surface 1322, or on the second surface 1312, the third surface 1321, and the fourth surface 1322. Color of the shielding layer 134 is usually a dark color, including but not limited to black, dark brown, brown, etc., to achieve the shielding effect.

In other implementations, the light-shielding region 11 may further be formed by at least one of a dark polymer film and a dimming element. The dark polymer film may be a bulk-tinted polymer film, and the material of the polymer film is a thermoplastic resin, such as PVB, polyethylene terephthalate (PET), polyvinyl chloride (PVC), EVA, thermoplastic polyurethane (TPU), polyolefin elastomer (POE), PU, or SGP, etc., with PET or PVB as preferable choice. For example, by adding coloring components during a manufacturing process of the polymer film for bulk-tinting, a black polymer film, a brown polymer film, etc., is obtained. Alternatively, the dark polymer film may be a polymer film with surface-printed pigments, such as a polymer film with black pigments, brown pigments, or paints printed on the surface of the polymer film, etc. The dimming element may be a polymer dispersed liquid crystal (PDLC) film, a suspended particle device (SPD) film, an electrochromic (EC) film, or a dye liquid crystal (LC) film, etc. The minimum visible light transmittance of the dimming element is less than or equal to 5%, such as 3%, 2%, 1%, 0.5%, or 0%. The maximum visible light transmittance of the dimming element is set as required, such as 10%, 20%, 30%, 50%, 70%, 80%, etc. Specifically, for example, the visible light transmittance of the dimming element may be adjusted between 0% and 20%, may be adjusted between 0.5% and 50%, or may be adjusted between 0% and 70%, etc., so as to meet the requirements of visible light transmittance in multiple scenarios.

Under normal circumstances, a strength of the windshield 1 is positively correlated with the HIC value, that is to say, the greater the strength of the windshield 1, the greater the HIC value; and vice versa, the smaller the strength of the windshield 1, the smaller the HIC value. In the disclosure, the light-transmitting region 12 is provided with a weakened region. The weakened region includes a first weakened region 121 and a second weakened region 122. The first weakened region 121 is configured to be tested by an adult-headform impactor. The first weakened region 121 is configured to achieve a first HIC value HIC1 within a time period of 0 to 15 milliseconds (ms) after a moment at which the first weakened region 121 is impacted by the adult-headform impactor. The second weakened region 122 is configured to be tested by the adult-headform impactor. The second weakened region 122 is configured to achieve a second HIC value HIC2 within a time period of 0 to 15 ms after a moment at which the second weakened region 122 is impacted by the adult-headform impactor. HIC1 < HIC2 and HIC2 < 1000.

It can be understood that, in the implementation, since HIC1 < HIC2 and HIC2 < 1000, by performing regional weakening on the windshield 1, region-specific control on the HIC value is achieved for different regions. Therefore, when the pedestrian collides with the vehicle, the first weakened region 121 can reduce the injury to the head of the pedestrian. At the same time, since the HIC value achieved by the second weakened region 122 of the windshield 1 is less than 1000, the second weakened region 122 of the windshield 1 has a certain strength and can provide impact protection for the vehicle occupant. In other words, by performing regional weakening on the windshield 1, the disclosure provides both collision protection for the pedestrian and impact protection for the vehicle occupant, thereby improving a comprehensive safety performance of the windshield 1.

It can be understood that, testing the first weakened region 121 and the second weakened region 122 by the adult-headform impactor can be conducted in accordance with Chinese standard GB24550, or in accordance with regulations such as European Union regulation ECE UN R127, European new car assessment programme (E-NCAP) protocol, C-NCAP, or Chinese insurance automotive safety index (C-IASI). In the disclosure, preferably, the test is conducted in accordance with Chinese standard GB24550, and the adult-headform impactor used is an adult-headform impactor specified in Chinese standard GB24550.

In the implementation, as illustrated in FIG. 1, the windshield 1 is mounted on the vehicle 2 including the instrument panel 21. The first weakened region 121 is fractured by impact from the adult-headform impactor, and the instrument panel 21 is impacted by the adult-headform impactor after the first weakened region 121 is fractured. The first weakened region 121 is configured to achieve an HIC value HIC11 within a time period of 0 to 5 ms after a moment at which the first weakened region 121 is impacted by the adult-headform impactor. The first weakened region 121 is configured to achieve an HIC value HIC12 within a time period of 5 to 15 ms after a moment at which the first weakened region 121 is impacted by the adult-headform impactor. When HIC12 is less than or equal to HIC11, HIC1 is equal to HIC11. When HIC12 is greater than HIC11, HIC1 is equal to HIC12. That is to say, HIC1 takes the larger of HIC11 and HIC12. HIC12 is always less than HIC2, that is, HIC12 < 1000 and HIC12 < HIC2.

During the collision between the pedestrian and the vehicle 2, the pedestrian head impact point is located in the first weakened region 121 of the windshield 1. In general, the windshield 1 fractures within a time period of 0 to 5 ms after the collision, and then the head of the pedestrian strikes the instrument panel 21 within a period of 5 to 15 ms after the collision. In the implementation, within a time period of 0 to 15 ms after a moment at which the pedestrian collides with the vehicle 2, the HIC value HIC11 generated by the contact of the head of the pedestrian with the windshield 1, and/or the HIC value HIC12 generated by the contact of the head of the pedestrian with the instrument panel 21, are both less than 1000. That is to say, by providing the first weakened region 121 on the windshield 1, not only is the first injury to the head of the pedestrian caused by the windshield 1 reduced, but also the second injury to the head of the pedestrian caused by the instrument panel 21 inside the vehicle is reduced.

In the implementation, it is preferable that $100 \le HIC11 \le 650$, and specific examples for HIC11 may be 100, 150, 200, 250, 300, 350, 400, 450, 500, 550, 600, 650, etc. The reason is that, during the collision between the pedestrian and the vehicle 2, the strength of the windshield 1 cannot be too low or too high. If the strength of the windshield 1 is too low, the head of the pedestrian may penetrate through the windshield 1. After the head of the pedestrian penetrates through the windshield 1, the head of the pedestrian may further strike the instrument panel 21 located below the windshield 1, and the instrument panel 21 may cause the secondary injury to the head of the pedestrian. In particular, when the instrument panel 21 is provided with the HUD projector, the front passenger airbag, or other hard and sharp decorative components, the secondary injury to the head of the pedestrian caused by the instrument panel 21 may be more serious than the primary injury to the head of the pedestrian caused by the windshield 1. In addition, after the head of the pedestrian penetrates through the windshield 1, the head of the pedestrian may collide with the vehicle occupant, causing greater injury to the head of the pedestrian and the vehicle occupant. If the strength of the windshield 1 is too high, it may affect a collision speed when the head of the pedestrian strikes the instrument panel 21, which in turn may affect the pedestrian HIC value generated by the impact of the head of the pedestrian on the instrument panel 21. Since the strength of the windshield 1 is positively correlated with the HIC value, it is required that $100 \le HIC11 \le 650$. Moreover, with $100 \le HIC11 \le 650$, when the pedestrian collides with the vehicle 2, a degree of injury to the head of the pedestrian caused by the windshield 1 can be reduced, a time when the head of the pedestrian makes contact with the instrument panel 21 can be advanced, and the maximum resultant acceleration during the collision between the pedestrian and the instrument panel 21 inside the vehicle can be reduced, thereby effectively reducing the injury to the head of the pedestrian. That is to say, with both HIC11 and HIC12 meeting the standard requirement of being less than 1000, a value of total injury to the head of the pedestrian can be reduced significantly.

In the implementation, it is more preferable that $200 \le HIC11 \le 500$. In this way, when the pedestrian collides with the vehicle 2, injury to the head of the pedestrian caused by the first impact from the windshield 1 can be reduced, the time when the head of the pedestrian makes contact with the instrument panel 21 inside the vehicle can be advanced, and the maximum resultant acceleration during the collision between the pedestrian and the instrument panel 21 inside the vehicle can be further reduced, thereby further reducing injury to the head of the pedestrian caused by the second impact. In addition, as the HIC value increases, the probability of skull fracture increases. To reduce the degree of injury to the head of the pedestrian, HIC11 is designed to satisfy: $200 \le HIC11 \le 500$.

In the implementation, it is preferable that $100 \le HIC2 \le 900$, and specific examples for HIC2 may be 100, 150, 200, 250, 300, 350, 400, 450, 500, 550, 600, 650, 700, 750, 800, 850, 900, etc. During the collision between the pedestrian and the vehicle 2, especially when the pedestrian head impact point is located in the second weakened region 122 of the windshield 1, although the head of the pedestrian only suffers the impact injury caused by the windshield 1, the possible injury to the vehicle occupant also needs to be considered. During the collision between the pedestrian and the vehicle 2, the strength of the windshield 1 cannot be too low; otherwise, it may cause the head of the pedestrian to penetrate through the windshield 1, resulting in greater injury to the head of the pedestrian and the vehicle occupant. The strength of the windshield 1 cannot be too high either, as it may increase the severity of injury to the head of the pedestrian. Since the strength of the windshield 1 is positively correlated with the HIC value, it is required that $100 \le HIC2 \le 900$. More preferably, $200 \le HIC2 \le 800$.

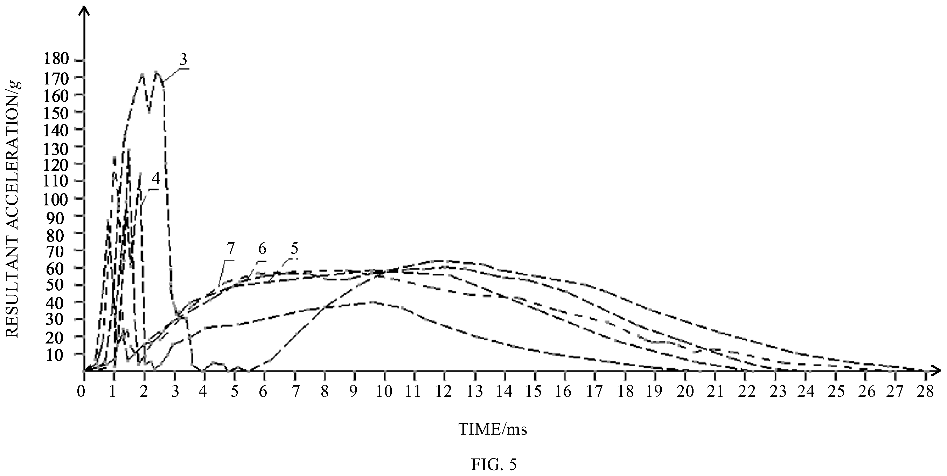

As illustrated in FIG. 5, multiple pieces of the windshield 1 that are further optimized in the disclosure are provided. According to Chinese standard GB24550, an adult-headform impactor is used for testing to simulate a process of the head of the pedestrian colliding with the windshield 1 after the pedestrian-vehicle collision. An acceleration sensor and a data acquisition instrument are used to obtain an impact curve related to impact time and resultant acceleration. During the collision between the pedestrian and the vehicle 2, when the pedestrian head impact point is located in the first weakened region 121 of the windshield 1, with reference to the curves illustrated in FIG. 2 and FIG. 5, it can be clearly seen that, the curve illustrated in FIG. 2 exhibits two wave peaks during the first impact, since the outer glass panel 131 and the inner glass panel 132 do not fracture at the same time. However, it is difficult to observe two obvious wave peaks on the curve illustrated in FIG. 5 during the first impact, therefore, it can be determined that the outer glass panel 131 and the inner glass panel 132 fracture at the same time. In particular, when the windshield 1 is provided with the first weakened region 121 and $100 \leq HIC11 \leq 650$, the outer glass panel 131 and the inner glass panel 132 can fracture at the same time to avoid multiple injuries to the head of the pedestrian, thereby effectively reducing the injury to the head of the pedestrian. That is to say, with both HIC11 and HIC12 meeting the standard requirement of being less than 1000, the value of total injury to the head of the pedestrian can be reduced significantly.

In a possible implementation, the light-shielding region 11 includes a top light-shielding region 111, a left light-shielding region 113, a bottom light-shielding region 112, and a right light-shielding region 114. The top light-shielding region 111 is located at the top of the windshield 1. The left light-shielding region 113 is located at the left of the windshield 1. The right light-shielding region 114 is located at the right of the windshield 1. The bottom light-shielding region 112 is located at the bottom of the windshield 1. The weakened region includes an upper boundary and a lower boundary opposite to each other, as well as a left boundary and a right boundary disposed opposite to each other between the upper boundary and the lower boundary. A distance between the lower boundary of the weakened region and the bottom light-shielding region 112 is x. A distance between the left boundary of the weakened region and the left light-shielding region 113 is *m*. A distance between the right boundary of the weakened region and the right light-shielding region 114 is *n*. A distance between the upper boundary of the weakened region and the top light-shielding region 111 is *y*. *x* is less than or equal to 15 mm. *m* is less than or equal to 15 mm. *n* is less than or equal to 15 mm. *y* is less than or equal to 50 mm. Specifically, examples of *x* may be 15 mm, 10 mm, 5 mm, 1 mm, etc. Examples of *m* may be 15 mm, 10 mm, 5 mm, 1 mm, etc. Examples of *n* may be 15 mm, 10 mm, 5 mm, 1 mm, etc. Examples of *y* may be 5 mm, 10 mm, 20 mm, 30 mm, 40 mm, 50 mm, etc.

In the implementation, reference is made to FIG. 3 again. The distance between a lower boundary 1212 of the first weakened region 121 and the bottom light-shielding region 112 is equal to x. The distance between a left boundary 1213 of the first weakened region 121 and the left light-shielding region 113 is equal to *m*. The distance between a right boundary 1214 of the first weakened region 121 and the right light-shielding region 114 is equal to *n*. A distance between an upper boundary 1211 of the first weakened region 121 and the lower boundary 1212 of the first weakened region 121 is *h. h* ranges from 100 mm to 300 mm. The distance between an upper boundary 1221 of the second weakened region 122 and the top light-shielding region 111 is equal to *y.* The distance between a left boundary 1223 of the second weakened region 122 and the left light-shielding region 113 is equal to *m.* The distance between a right boundary 1224 of the second weakened region 122 and the right light-shielding region 114 is equal to *n.* Examples of *h* may be 100 mm, 120 mm, 150 mm, 180 mm, 200 mm, 230 mm, 250 mm, 280 mm, 300 mm, etc.

From the above, in an up-down direction of the windshield 1, a width of the first weakened region 121 ranges from 100 to 300 mm, so that the first weakened region 121 can cover over more regions of the instrument panel 21 below the first weakened region 121. Therefore, when the windshield 1 is mounted on the vehicle 2, the first weakened region 121 can better correspond to a position of the instrument panel 21 of the vehicle 2. Furthermore, when the pedestrian collides with the vehicle 2, part of the windshield 1 in the first weakened region 121 can fracture rapidly, shortening a time duration of the first impact, advancing the appearance of the wave peak of the second impact, and reducing a wave peak value of the second impact.

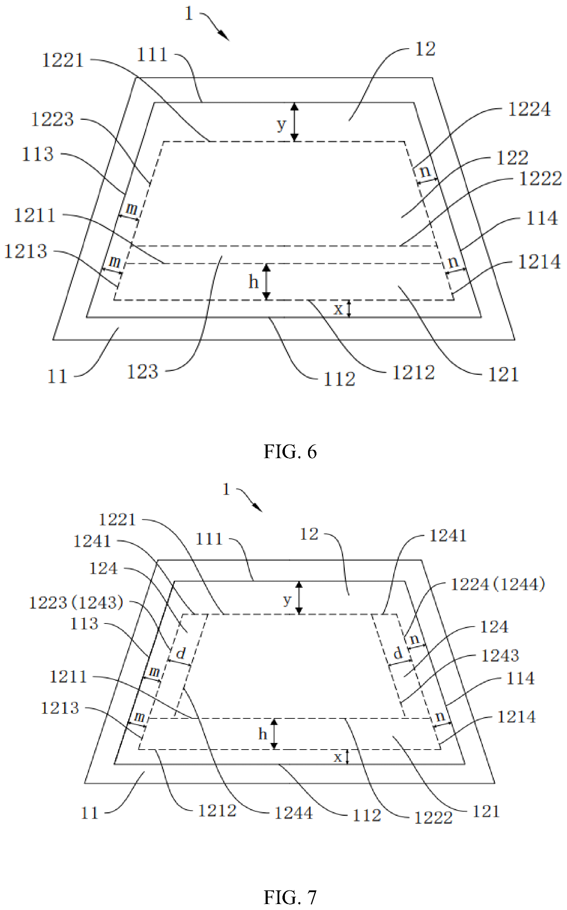

In a possible implementation, reference is further made to FIG. 6. A transition weakened region 123 is provided between a lower boundary 1222 of the second weakened region 122 and the upper boundary 1211 of the first weakened region 121. An area of the transition weakened region 123 is smaller than an area of the first weakened region 121. According to standard GB24550, the transition weakened region 123 is configured to be tested by the adult-headform impactor. The transition weakened region 123 is configured to achieve a third HIC value HIC3 within a time period of 0 to 15 ms after a moment at which the transition weakened region 123 is impacted by the adult-headform impactor. HIC3 is greater than HIC1 and less than HIC2.

It can be understood that when a strength of each region of the windshield 1 is more even, the overall stability of the windshield 1 is higher. Conversely, if there are great differences in strengths among various regions of the windshield 1, the difficulty for the manufacturing of the windshield 1 may be increased, and the windshield 1 may be prone to fracture at regions with relatively large differences in strengths, thereby resulting in relatively poor overall stability.

In the implementation, by providing the first weakened region 121, the second weakened region 122, and the transition weakened region 123 on the light-transmitting region 12 of the windshield 1, and by setting HIC3 to be greater than HIC1 and less than HIC2, a sudden change in a strength at a boundary of the first weakened region 121 and the second weakened region 122 of the windshield 1 is avoided, so that the overall stability of the windshield 1 is higher and the process difficulty for the manufacturing of the windshield 1 is reduced.

In a possible implementation, reference is further made to FIG. 7, where FIG. 7 is a schematic view of a windshield provided by another implementation of the disclosure. The weakened region further includes a third weakened region 124. There are two third weakened regions 124. The two third weakened regions 124 are respectively disposed on a left side and a right side of the weakened region. The second weakened region 122 is located between the two third weakened regions 124. The first weakened region 121 is located below the second weakened region 122 and the two third weakened regions 124. The distance between an upper boundary 1241 of each of the two third weakened regions 124 and the top light-shielding region 111 is equal to $y$. The distance between a left boundary 1243 of the third weakened region 124 at the left side and the left light-shielding region 113 is equal to $m$. The distance between a right boundary 1244 of the third weakened region 124 at the right side and the right light-shielding region 114 is equal to $n$. The distance between a left boundary 1243 and a right boundary 1244 of each of the two third weakened regions 124 is $d$, and $d$ ranges from 50 mm to 300 mm. The third weakened region 124 is configured to be tested by the adult-headform impactor in accordance with standard GB24550. The third weakened region 124 is configured to achieve a fourth HIC value HIC4 within a time period of 0 to 15 ms after a moment at which the third weakened region 124 is impacted by the adult-headform impactor. HIC4 is greater than HIC1 and less than HIC2. Examples of $d$ may be 50 mm, 70 mm, 100 mm, 120 mm, 150 mm, 180 mm, 200 mm, 230 mm, 250 mm, 280 mm, 300 mm, etc.

The two third weakened regions 124 are respectively disposed at the left side and the right side opposite to each other of the weakened region. When the windshield 1 is mounted on the vehicle 2, the two third weakened regions 124 of the windshield 1 correspond to A-pillars of the vehicle 2, respectively. It can be understood that the pedestrian located at sides of the vehicle 2 or within a blind spot of vision is not easily observable, so that a risk of the pedestrian colliding with the sides of the vehicle 2 may be higher than a risk of the pedestrian colliding with the front of the vehicle 2. Therefore, with HIC4 being less than HIC2, when the pedestrian collides with the sides of the vehicle 2, the injury to the head of the pedestrian can be further reduced. In addition, it is necessary to consider the possible impact injury to the vehicle occupant. Therefore, a strength of the third weakened region 124 of the windshield 1 is required to be higher than a strength of the first weakened region 121. Since the strength of the windshield 1 is positively correlated with the HIC value, HIC4 is required to be greater than HIC1, so as to better protect the safety of the vehicle occupant at the left and right sides of the windshield 1.

In a possible implementation, the first weakened region is configured to cause the adult-headform impactor to have a first maximum resultant acceleration $a5$ within a time period of 0 to 5 ms after a moment at which the first weakened region 121 is impacted by the adult-headform impactor, and the first weakened region is configured to cause the adult-headform impactor to have a second maximum resultant acceleration $a15$ within a time period of 5 to 15 ms after a moment at which the first weakened region 121 is impacted by the adult-headform impactor, where $a5$ is greater than $a15$. During the collision between the pedestrian and the vehicle 2, especially when the pedestrian head impact point is located in the first weakened region 121 of the windshield 1, part of the windshield 1 in the first weakened region 121 can fracture rapidly, reducing the maximum resultant acceleration during the collision between the pedestrian and the instrument panel 21 inside the vehicle, and further reducing the injury to the head of the pedestrian caused by the second impact. Preferably, $a5$ is less than or equal to 180 $g$, and $a15$ is less than or equal to 100 g. The reason is that, if $a5$ is greater than 180 g and $a15$ is greater than 100 $g$, the probability of death during the collision between the pedestrian and the vehicle 2 may be higher. More preferably, the first maximum resultant acceleration $a5$ is less than or equal to 150 g, and the second maximum combined acceleration $a15$ is less than or equal to 80 g.

In a possible implementation, within a time period of 0 to 15 ms after a moment at which the first weakened region 121 is impacted by the adult-headform impactor, a time duration during which the adult-headform impactor has a resultant acceleration $a$ greater than 50 g is less than or equal to 3 ms. In this way, the windshield 1 can be prevented from atypical fracture, thereby reducing the injury to the head of the pedestrian during the collision.

During the collision between the pedestrian and the vehicle 2, since the pedestrian head impact point is located in the first weakened region 121 of the windshield 1, the head of the pedestrian may not only suffer from the injury caused by the first impact from the windshield 1, but may also suffer from the injury caused by the second impact from the instrument panel 21 inside the vehicle. In addition, the windshield 1 is required to satisfy both requirements for pedestrian collision protection and safety requirements for the vehicle occupant. Therefore, in the implementation, a ratio of the area of the first weakened region 121 to an area of the light-transmitting region 12 is less than or equal to 1/3, a ratio of an area of the second weakened region 122 to the area of the light-transmitting region 12 is less than or equal to 2/3, and the area of the first weakened region 121 is smaller than the area of the second weakened region 122. By reducing the area of the first weakened region 121 of the windshield 1, the probability of secondary injury to the head of the pedestrian caused by the instrument panel 21 inside the vehicle is reduced.

In a possible implementation, a bending strength of the third surface 1321 is greater than a bending strength of the second surface 1312, and/or a bending strength of the fourth surface 1322 is greater than the bending strength of the second surface 1312. In this way, during the collision between the pedestrian and the vehicle 2, the outer glass panel 131 is relatively prone to fracture, reducing the injury value to the head of the pedestrian. In addition, a strength of the inner glass panel 132 is required to be greater than a strength of the outer glass panel 131 when the front passenger airbag is deployed.

At present, a thickness of the commonly used intermediate layer 133 ranges from 0.76 mm to 1.52 mm. In the implementation, to reduce the strength of the windshield 1, a thickness of part of the intermediate layer 133 in the first weakened region 121 is set to range from 0.38 mm to 0.6 mm, and specific examples may be 0.38 mm, 0.5 mm, 0.6 mm, etc. To ensure an overall strength of the second weakened region 122, it is preferable that a thickness of part of the intermediate layer 133 in the second weakened region 122 is at least 0.76 mm. That is to say, the thickness of part of the intermediate layer 133 in the first weakened region 121 is set to range from 0.38 mm to 0.6 mm, and the thickness of part of the intermediate layer 133 in the second weakened region 122 is set to be at least 0.76 mm.

According to the research of applicants, a moisture content of the intermediate layer 133 may affect a bonding strength between the intermediate layer 133 and the outer glass panel 131, as well as a bonding strength between the intermediate layer 133 and the inner glass panel 132. The moisture content of the intermediate layer 133 in the traditional windshield 1 ranges from 0.45% to 0.55%, so that a better connecting strength can be provided and the HIC value achieved by the windshield 1 can be higher. In a possible implementation, the moisture content of the intermediate layer 133 ranges from 0.3% to 0.4%, and specific examples may be 0.3%, 0.32%, 0.35%, 0.38%, 0.4%, etc. Alternatively, the moisture content of the intermediate layer 133 ranges from 0.6% to 0.7%, and specific examples may be 0.6%, 0.61%, 0.63%, 0.65%, 0.68%, 0.7%, etc. The reason is that the moisture content may affect the bonding performance of the intermediate layer 133, thereby affecting the overall strength of the windshield 1. In this way, during the collision between the pedestrian and the vehicle 2, the windshield 1 can be relatively prone to fracture, and the injury to the head of the pedestrian can be reduced.

In the disclosure, both the outer glass panel 131 and the inner glass panel 132 are made of float glass. During the manufacturing of the float glass, an air surface and a tin surface are formed. A concentration of tin oxide on the tin surface is greater than a concentration of tin oxide on the air surface. In the implementation, a concentration of tin oxide on the second surface 1312 is greater than a concentration of tin oxide on the first surface 1311, and a concentration of tin oxide on the third surface 1321 is greater than a concentration of tin oxide on the fourth surface 1322. That is to say, the second surface 1312 of the outer glass panel 131 and the third surface 1321 of the inner glass panel 132 can be set as tin surfaces. The reason is that the roughness of the tin surface is less than the roughness of the air surface, thereby reducing the overall strength of the windshield 1. In this way, during the collision between the pedestrian and the vehicle 2, the windshield 1 can be relatively prone to fracture, and the injury to the head of the pedestrian caused by the windshield 1 can be reduced. In the implementation, the concentration of tin oxide on the first surface 1311 is greater than the concentration of tin oxide on the second surface 1312, and the concentration of tin oxide on the fourth surface 1322 is greater than the concentration of tin oxide on the third surface 1321. That is to say, the first surface 1311 of the outer glass panel 131 and the fourth surface 1322 of the inner glass panel 132 can be set as tin surfaces, thereby reducing the overall strength of the windshield 1. In this way, during the collision between the pedestrian and the vehicle 2, the windshield 1 can be relatively prone to fracture, and the injury to the head of the pedestrian caused by the windshield 1 can be reduced.

At present, a thickness of the commonly used outer glass panel 131 is greater than or equal to the thickness of the inner glass panel 132. During the collision between the pedestrian and the vehicle 2, the outer glass panel 131 is not prone to fracture, which may cause injury to the head of the pedestrian. In the implementation, the thickness of the outer glass panel 131 is set to be less than the thickness of the inner glass panel 132, and a ratio of the thickness of the outer glass panel 131 to the thickness of the inner glass panel 132 is greater than or equal to 0.75 and less than 1, such as 0.75, 0.8, 0.85, 0.9, 0.95, 0.96, 0.97, 0.98, 0.99, etc. In this way, the inner glass panel 132 and the outer glass panel 131 can fracture rapidly at the same time or nearly at the same time, thereby shortening a fracturing time for the windshield 1 after being impacted to less than 3 ms, and eventually reducing the injury caused by the windshield 1 to the head of the pedestrian. Specifically, examples can be given where the thickness of the outer glass panel 131 is 1.6 mm and the thickness of the inner glass panel 132 is 2.1 mm, or the thickness of the outer glass panel 131 is 1.8 mm and the thickness of the inner glass panel 132 is 2 mm.

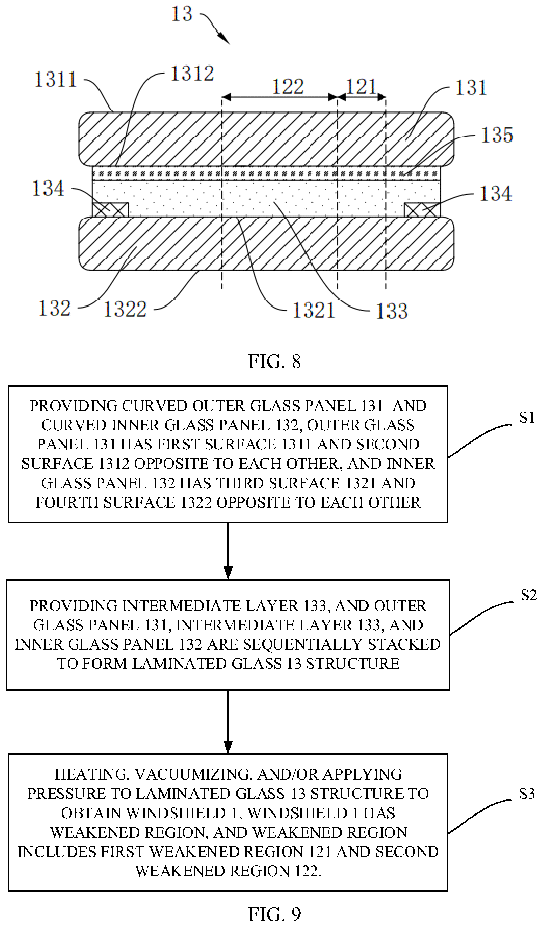

In the implementation, as illustrated in FIG. 8, which is another schematic cross-sectional view of FIG. 3 taken along Line I-I, a weakening coating 135 is further provided on at least one of the second surface 1312, the third surface 1321, and the fourth surface 1322. The weakening coating 135 covers at least the first weakened region 121. Preferably, the weakening coating 135 covers at least the first weakened region 121 and the second weakened region 122. Further preferably, the weakening coating 135 covers at least the light-transmitting region 12. During the manufacturing process of the windshield 1, the weakening coating 135, together with the outer glass panel 131 or the inner glass panel 132, undergoes a heating and softening process, a bending process, and an annealing process. Due to the differences in heating rates and annealing rates between the weakening coating 135 and the outer glass panel 131 or between the weakening coating 135 and the inner glass panel 132, a glass surface with the weakening coating 135 exerts mechanical stress towards an interior of the glass, resulting in an increase in the tensile stress inside the glass and an increase in the compressive stress on the glass surface with the weakening coating 135, thereby in turn reducing the stress on a glass surface without the weakening coating 135. As a result, an effect of HIC1 < HIC2 and HIC2 < 1000 is realized. The weakening coating 135 can be applied to at least one of the second surface 1312, the third surface 1321, or the fourth surface 1322 by a physical vapor deposition (PVD) method or a sol-gel method. The PVD method is preferably a magnetron sputtering process. It can be understood that the weakening coating 135 can not only weaken the windshield 1, but can also bring functions of the weakening coating 135 to the windshield 1, such as heat insulation, ultraviolet insulation, electric heating for defrosting and defogging, improving P-polarized light reflectivity to realize HUD, reducing visible light reflectivity, preventing fogging, hydrophobicity, anti-glare, etc.

In some implementations, the weakening coating 135 may cover at least 30% of area of the windshield 1, or at least 40% of the area of the windshield 1, or at least 50% of the area of the windshield 1, or at least 60% of the area of the windshield 1, or at least 70% of the area of the windshield 1, or at least 80% of the area of the windshield 1, or at least 90% of the area of the windshield 1, or even 100% of the area of the windshield 1.

In some implementations, the weakening coating 135 includes at least one infrared reflective functional layer. The infrared reflective functional layer may be a metal layer, a metal alloy layer, or a transparent conductive oxide (TCO) layer. The number of infrared reflective functional layers in the weakening coating 135 may be one, or may be two, three, or four, or may even be five, etc. Considering design complexity, production difficulty, manufacturing cost, etc., the number of infrared reflective functional layers is preferably ranging from 2 to 4. It can be understood that the weakening coating 135 further includes at least two dielectric layers. Each of the infrared reflective functional layers is located between two adjacent dielectric layers. On the one hand, the dielectric layer has a function of protecting the infrared reflective functional layer, preventing the infrared reflective functional layer from being oxidized or corroded. On the other hand, the dielectric layer can adjust an optical property, a mechanical property, and a reflection color of the weakening coating 135.

The material of the metal layer may be selected from gold (Au), silver (Ag), copper (Cu), or aluminum (Al). The material of the metal alloy layer may be selected from a silver alloy with a silver content greater than or equal to 90%, such as a silver-copper alloy, a silver-indium alloy, a silver-aluminum alloy, etc. A thickness of the metal layer or a thickness of the metal alloy layer ranges from 5 nm to 20 nm. When the infrared reflective functional layer is the metal layer or the metal alloy layer, the weakening coating 135 is disposed on the second surface 1312 or on the third surface 1321.

The infrared reflective functional layer may be the TCO layer. The material of the TCO layer may include one or more selected from the group consisting of indium tin oxide (ITO), nickel chromium oxide (NiCrOx), fluorine-doped tin oxide (FTO), zinc tin oxide (ZnSnOx), and doped zinc oxide. The doping elements in the doped zinc oxide may include one or more selected from the group consisting of aluminum (Al), tungsten (W), hafnium (Hf), gallium (Ga), yttrium (Y), niobium (Nb), and neodymium (Nd), examples of which may include aluminum-doped zinc oxide (AZO) and AZO doped with hafnium and aluminum (HAZO). In some embodiments, a thickness of the TCO layer ranges from 50 nm to 300 nm. When the infrared reflective functional layer is the TCO layer, the weakening coating 135 is disposed on the second surface 1312, the third surface 1321, or the fourth surface 1322.

In other implementations, the weakening coating 135 includes at least one stack structure of "high-refractive-index layer/low-refractive-index layer", where a refractive index of the high-refractive-index layer is not less than 1.8, and the refractive index of the low-refractive-index layer is not greater than 1.7. The weakening coating 135 is used to reduce the visible light reflectivity of the windshield 1 or to increase the P-polarized light reflectivity of the windshield 1. Specifically, the weakening coating 135 may include 1 to 4 such stack structures. For example, the weakening coating 135 may include one stack structure of high-refractive-index layer/low-refractive-index layer, where the high-refractive-index layer is directly disposed on the second surface 1312, the third surface 1321, or the fourth surface 1322, and the low-refractive-index layer is disposed on the high-refractive-index layer. The weakening coating 135 may include two stack structures of high-refractive-index layer/low-refractive-index layer, that is, the layers are sequentially deposited outward as a first high-refractive-index layer, a first low-refractive-index layer, a second high-refractive-index layer, and a second low-refractive-index layer, with the first high-refractive-index layer directly disposed on the second surface 1312, the third surface 1321, or the fourth surface 1322. The weakening coating 135 may include three stack structures of high-refractive-index layer/low-refractive-index layer, that is, the layers are sequentially deposited outward as the first high-refractive-index layer, the first low-refractive-index layer, the second high-refractive-index layer, the second low-refractive-index layer, a third high-refractive-index layer, and a third low-refractive-index layer, with the first high-refractive-index layer directly disposed on the second surface 1312, the third surface 1321, or the fourth surface 1322.

A manufacturing method for the windshield 1 is further provided in the disclosure. The manufacturing method is used to manufacture the aforementioned windshield 1. Reference is further made to FIG. 9, where FIG. 9 is a schematic flowchart of the manufacturing method for the windshield 1 provided by an implementation of the disclosure. The manufacturing method for the windshield 1 includes steps S1, S2, and S3, and the detailed introduction of steps S1, S2, and S3 is as follows.

At S1, a curved outer glass panel 131 and a curved inner glass panel 132 are provided. The outer glass panel 131 has the first surface 1311 and the second surface 1312 opposite to each other. The inner glass panel 132 has the third surface 1321 and the fourth surface 1322 opposite to each other.

At S2, the intermediate layer 133 is provided. The outer glass panel 131, the intermediate layer 133, and the inner glass panel 132 are sequentially stacked to form the laminated glass 13 structure.

At S3, the laminated glass 13 structure is heated, vacuumized and/or applied with pressure to obtain the windshield 1. The windshield 1 has the weakened region. The weakened region includes the first weakened region 121 and the second weakened region 122.

In the implementation, part of the outer glass panel 131 and/or part of the inner glass panel 132 located in the weakened region is weakened by at least one of the following methods.

(1) An internal flaw is introduced between the first surface 1311 and the second surface 1312 by a laser weakening method.
(2) An internal flaw is introduced between the third surface 1321 and the fourth surface 1322 by the laser weakening method.
(3) A microcrack is formed on the second surface 1312 by a physical-friction weakening method.
(4) A fracture line is formed on the second surface 1312 by a chemical-etching weakening method.

It can be understood that the aforementioned weakening methods do not affect the occupant of the vehicle 2 to observe an external environment outside the vehicle 2 through the windshield 1. In other possible implementations, the disclosure does not limit the weakening methods applied to the transparent panel, provided that such weakening methods do not affect the occupant of the vehicle 2 to observe the external environment outside the vehicle 2 through the windshield 1.

In the disclosure, a weakened structure may be located only in the first weakened region 121, or multiple weakened structures may be respectively located in the first weakened region 121 and the second weakened region 122. The weakened structure in the first weakened region 121 may be the same as or different from the weakened structure in the second weakened region 122.

In the implementation, the curved outer glass panel 131 and the curved inner glass panel 132 are obtained by performing a heating and softening process, a bending process, and an annealing process on flat glass. By setting different conditions for the heating and softening process, the bending process, and the annealing process, the stress on the outer glass panel 131 and the inner glass panel 132 can be further adjusted, and the HIC value achieved by the windshield 1 can be further adjusted. The heating and softening process uses a heating element to raise the temperature of the flat glass to a softening temperature. The bending process uses a bending mold to bend the flat glass, and the bending mold may include at least one of a solid punch, a solid die, an annular punch, or an annular die. The annealing process uses a blowing device to reduce a temperature of the curved outer glass panel 131 and a temperature of the curved inner glass panel 132 to a room temperature. Preferably, the heating and softening process, the bending process, and the annealing process satisfy at least one of the following conditions.

(1) A heating temperature ranges from 660°C to 750°C during the heating and softening process.
(2) A convection heating method is adopted to soften the flat glass during the heating and softening process.
(3) The convection heating method and a radiant heating method are both adopted to soften the flat glass during the heating and softening process.
(4) A surface of the flat glass with a lower concentration of tin oxide faces the heating element during the heating and softening process.
(5) A heating and softening time for the outer glass panel 131 is longer than a heating and softening time for the inner glass panel 132 during the heating and softening process.
(6) A temperature of the bending mold for bending the flat glass is greater than or equal to 500°C during the bending process.
(7) A blowing pressure applied to the outer glass panel 131 is lower than a blowing pressure applied to the inner glass panel 132 during the annealing process.
(8) An annealing time for the outer glass panel 131 is longer than an annealing time for the inner glass panel 132 during the annealing process.

In the implementation, by adjusting parameters during the heating and softening process, the bending process, and the annealing process of the glass, the stress on the first weakened region 121 and the second weakened region 122 of the windshield 1 is reduced. For example, during the heating and softening process of the glass, when a time for heating and heat-preservation is longer, a difference in temperature is more uniform, and the stress of the glass is less. During the annealing process of the glass, when a cooling time is longer and/or the blowing pressure during cooling is lower, the stress of the glass is less.

In other implementations, measures such as heat-preservation in a furnace and adding an auxiliary heating tool to the first weakened region 121 of the windshield can be implemented, so that the first weakened region 121 and the second weakened region 122 of the windshield 1 have different heating temperatures, and further have different stresses after the windshield is formed.

In the implementation, before the laminated glass 13 structure is formed, the intermediate layer undergoes a humidity conditioning treatment or a stretching treatment. The moisture content of the intermediate layer after the humidity conditioning treatment ranges from 0.3% to 0.4% or from 0.6% to 0.7%. The thickness of the intermediate layer 133 in the first weakened region 121 after the stretching treatment ranges from 0.38 mm to 0.6 mm.

Embodiments 1 to 8 and Comparative Examples 1 to 6

Prepare multiple pieces of 2.1 mm-thick float glass. Obtain curved outer glass panels 131 and curved inner glass panels 132 by performing heating and softening process, bending process, and annealing process on the float glass. Use 0.76 mm-thick PVBs as intermediate layers 133. Stack the intermediate layers 133 with the curved outer glass panels 131 and curved inner glass panels 132 according to the manufacturing method described in the disclosure to form laminated glass 13 structures. Heat, vacuumize, and/or apply pressure to the laminated glass 13 structures to obtain windshields 1 of Embodiments 1 to 8 and Comparative Examples 1 to 6. A windshield of Comparative Example 1 is not subjected to weakening optimization, and has no weakened region; that is, HIC1 is equal to HIC2 in Comparative Example 1, and HIC1/HIC2 is an HIC value achieved by the overall windshield. A windshield of Comparative Example 2 is subjected to weakening optimization, has a first weakened region 121 and a second weakened region 122, and satisfies HIC1 < HIC2, but both HIC1 and HIC2 are less than 100. A windshield of Comparative Example 3 is subjected to weakening optimization, has a first weakened region 121 and a second weakened region 122, and satisfies HIC1 < HIC2, but both HIC1 and HIC2 are greater than 1000. A windshield of Comparative Example 4 is subjected to weakening optimization, has a first weakened region 121 and a second weakened region 122, and satisfies HIC1 < HIC2 but HIC2 > 1000. A windshield of Comparative Example 5 is subjected to weakening optimization, has a first weakened region 121 and a second weakened region 122, but does not satisfy HIC1 < HIC2, and HIC1 is greater than 1000. A windshield of Comparative Example 6 is subjected to weakening optimization, has a first weakened region 121 and a second weakened region 122, both HIC1 and HIC2 are less than 1000, but do not satisfy HIC1 < HIC2. The windshields of Embodiments 1 to 8 are subjected to weakening optimization, have first weakened regions 121 and second weakened regions 122, and satisfy HIC1 < HIC2 and HIC2 < 1000.

According to Chinese standard GB24550, each of the windshields 1 of Embodiments 1 to 8 and Comparative Examples 1 to 6 is tested by the adult-headform impactor. The first weakened region 121 is fractured by impact from the adult-headform impactor, and the instrument panel 21 is impacted by the adult-headform impactor after the first weakened region 121 is fractured. Alternatively, the second weakened region 122 is fractured by the impact from the adult-headform impactor. An acceleration sensor and a data acquisition instrument are used to obtain impact curves related to impact time and resultant acceleration. The fracturing phenomenon of the windshield 1 is obtained through observation or calculation, and the test results are recorded in Table 1.

Atypical fracture: at least one of the phenomena (1) to (3) occurs.

(1) With the first weakened region 121 or the second weakened region 122 being impacted by the adult-headform impactor, the windshield 1 remains un-fractured for more than 1 ms.
(2) The first maximum resultant acceleration $a5$ is greater than 180 g within a time period of 0 to 5 ms in the impact curve.
(3) For the resultant acceleration $a$ within a time period of 0 to 15 ms in the impact curve, an average value of the maximum resultant acceleration is greater than 50 g in a continuous time duration of 3 ms.

Typical fracture: HIC1 is less than HIC2 and HIC2 < 1000, and no atypical fracture phenomenon occurs.

Table 1 Test results of windshields 1 in Embodiments 1 to 8 and Comparative Examples 1 to 6

| | HIC1 | HIC2 | $a5$/g | $t_{a5}$/ms | $a15$/g | $t_{a15}$/ms | Fracturing Phenomenon | |
| | | | | | | | First Weakened Region | Second Weakened Region |
|---|---|---|---|---|---|---|---|---|
| Comparative Example 1 | 2070.7 | 2070.7 | 225.2 | 4.0 | / | / | Un-fractured | Un-fractured |
| Comparative Example 2 | 58.2 | 99.8 | 46.2 | 2.1 | 181 | 15 | Completely Penetrated | Completely Penetrated |
| Comparative Example 3 | 1145.3 | 1302.2 | 170 | 3.2 | 185 | 14.8 | Atypical Fracture | Atypical Fracture |

(continued)

| | HIC1 | HIC2 | *a5*/g | t$_{a5}$/ms | *a15*/g | t$_{a15}$/ms | Fracturing Phenomenon | |
| | | | | | | | First Weakened Region | Second Weakened Region |
|---|---|---|---|---|---|---|---|---|
| Comparative Example 4 | 620.2 | 1103.4 | 126.2 | 3.5 | 134 | 14.0 | Typical Fracture | Atypical Fracture |
| Comparative Example 5 | 1094.8 | 583.6 | 170.3 | 3.2 | 181 | 14.7 | Atypical Fracture | Typical Fracture |
| Comparative Example 6 | 933.5 | 470.6 | 177.9 | 3.0 | 175 | 13.8 | Atypical Fracture | Typical Fracture |
| Embodiment 1 | 440.21 | 920.3 | 172 | 2.725 | 63 | 12.0 | Typical Fracture | Typical Fracture |
| Embodiment 2 | 501.0 | 883.2 | 169.7 | 2.8 | 90 | 12.4 | Typical Fracture | Typical Fracture |
| Embodiment 3 | 325.6 | 706.5 | 128.5 | 0.9 | 56.3 | 9.0 | Typical Fracture | Typical Fracture |
| Embodiment 4 | 285.1 | 620.3 | 79.4 | 0.6 | 56.5 | 8.0 | Typical Fracture | Typical Fracture |
| Embodiment 5 | 113.7 | 601.2 | 115.7 | 1.7 | 37.5 | 10 | Typical Fracture | Typical Fracture |
| Embodiment 6 | 231.3 | 515.0 | 127.9 | 1.2 | 55 | 9.5 | Typical Fracture | Typical Fracture |
| Embodiment 7 | 249.2 | 424.3 | 90.6 | 0.8 | 55.1 | 9.3 | Typical Fracture | Typical Fracture |
| Embodiment 8 | 155.7 | 287.1 | 107.9 | 1.6 | 42.3 | 9.7 | Typical Fracture | Typical Fracture |

It can be noted that each of the values listed in HIC1 column represents the HIC value HIC1 measured within a time period of 0 to 15ms after a moment at which the first weakened region 121 is impacted by the adult-headform impactor. Each of the values listed in HIC2 column represents the HIC value HIC2 measured within a time period of 0 to 15 ms after a moment at which the second weakened region 122 is impacted by the adult-headform impactor. Each of the values listed in *a5* column represents the first maximum resultant acceleration measured within a time period of 0 to 5 ms after a moment at which the first weakened region 121 is impacted by the adult-headform impactor, in the unit of g. Each of the values listed in *a15* column represents the second maximum resultant acceleration measured within a time period of 5 to 15 ms after a moment at which the first weakened region 121 is impacted by the adult-headform impactor, in the unit of *g*. Each of the values listed in t$_{a5}$ column represents an occurrence moment of the first maximum resultant acceleration, in the unit of ms. Each of the values listed in t$_{a15}$ column represents an occurrence moment of the second maximum resultant acceleration, in the unit of ms.

It can be seen from the above Table 1 that, HIC1 and HIC2 of Comparative Example 1 are greater than 2000, and the windshield 1 does not fracture during the test but causes very serious primary injury to the head of the pedestrian. In Comparative Example 2, HIC1 < HIC2, but both HIC1 and HIC2 are less than 100. The windshield 1 is completely penetrated during the test. Although the primary injury caused by the windshield 1 to the head of the pedestrian is small, the instrument panel 21 causes very serious secondary injury to the head of the pedestrian. In Comparative Example 3, HIC1 < HIC2, but both HIC1 and HIC2 are greater than 1000. The atypical fracture occurs in both the first weakened region 121 and the second weakened region 122 of the windshield 1, and *a15* is greater than 180 *g*, therefore, the instrument panel 21 may cause relatively serious secondary injury to the head of the pedestrian. In Comparative Example 4, HIC1 < HIC2 but HIC2 > 1000. The atypical fracture occurs in the second weakened region 122 of the windshield 1, which may cause relatively serious primary injury to the head of the pedestrian. In Comparative Example 5, HIC1 < HIC2 and HIC1 is greater than 1000. The atypical fracture occurs in the first weakened region 121 of the windshield 1, and *a15* is greater than 180 *g*, therefore, the instrument panel 21 may cause relatively serious secondary injury to the head of the pedestrian. In Comparative Example 6, both HIC1 and HIC2 are less than 1000 but do not satisfy HIC1 < HIC2, and the atypical fracture occurs in the first weakened region 121 of the windshield 1.

In Embodiments 1 to 8, HIC1 < HIC2 and HIC2 < 1000. The typical fracture occurs in both the first weakened region 121 and the second weakened region 122 of the windshield 1, and both $a5$ and $a15$ are less than 180 g, where $a15$ is less than 100 g. That is to say, by performing regional weakening on the windshield 1, region-specific control on the HIC value is achieved for different regions. When the pedestrian head impact point is located in the first weakened region 121 of the windshield 1, both the primary injury to the head of the pedestrian caused by the windshield 1 and the secondary injury caused by the instrument panel 21 can be reduced during the pedestrian-vehicle collision, making it possible to provide both collision protection for the pedestrian and impact protection for the vehicle occupant, thereby improving the comprehensive safety performance of the windshield 1. When the pedestrian head impact point is located in the second weakened region 122 of the windshield 1, HIC2 is less than 1000 and the second weakened region 122 of the windshield 1 has a certain strength, so that the windshield 1 can also provide both collision protection for the pedestrian and impact protection for the vehicle occupant, thereby improving the comprehensive safety performance of the windshield 1.

During the collision between the pedestrian and the vehicle 2, when the pedestrian head impact point is located in the first weakened region 121 of the windshield 1, by providing the first weakened region 121 on the windshield 1, and $200 \leq HIC1 \leq 500$, a moment when the head of the pedestrian makes contact with the instrument panel 21 is significantly advanced, and $a15$ is significantly lower than $a5$, thereby effectively reducing an area bounded by a curve of the resultant acceleration and an abscissa representing time within a time period of 0 to 15 ms after a moment at which the first weakened region 121 is impacted by the adult-headform impactor. That is, the HIC value generated within a time period of 0 to 15 ms after a moment at which the first weakened region 121 is impacted by the adult-headform impactor is reduced, thereby reducing the injury to the head of the pedestrian.

Furthermore, when HIC1 is close to or less than 500, the second maximum resultant acceleration $a15$ can be significantly reduced. That is to say, during the collision between the pedestrian and the vehicle 2, when the pedestrian head impact point is located in the first weakened region 121 of the windshield 1, and HIC1 is close to or less than 500, part of the windshield 1 in the first weakened region 121 can fracture rapidly, reducing the maximum resultant acceleration $a15$ during the collision between the pedestrian and the instrument panel 21 inside the vehicle, and further reducing the injury to the head of the pedestrian caused by the second impact.

Compared with other comparative examples and embodiments, in Embodiment 4, for the vehicle, when the HIC value HIC1 achieved by the first weakened region 121 of the windshield 1 is 285.1, and the HIC value HIC2 achieved by the second weakened region 122 of the windshield 1 is 620.3, the injury to the head of the pedestrian is minimal.

It can be understood that in other possible implementations, the first HIC value HIC1 achieved by the first weakened region 121 and the second HIC value HIC2 achieved by the second weakened region 122 of the windshield 1 may be other values, which are not limited in the disclosure.

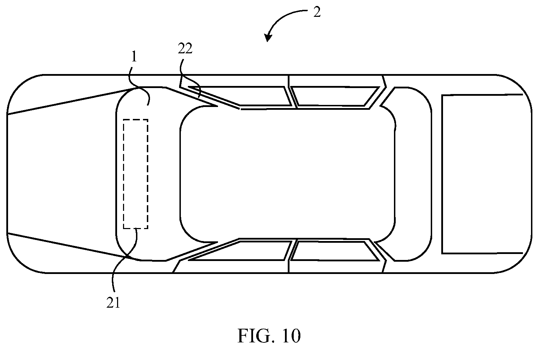

A vehicle 2 is further provided in the disclosure. Reference is further made to FIG. 10, where FIG. 10 is a schematic top view of the vehicle provided by an implementation of the disclosure. The vehicle 2 includes a frame 22, an instrument panel 21, and the windshield 1 as described above. The instrument panel 21 is disposed at a position adjacent to a lower side of the windshield 1. Specifically, for the instrument panel 21, the windshield 1, the first weakened region 121, the second weakened region 122, and the HIC value, reference can be made to the above description, which will not be repeated in the disclosure.

The principles and implementations of the disclosure are described herein by way of specific examples, and the description of the above implementations is merely intended to facilitate comprehension of the core idea of the disclosure. Meanwhile, those of ordinary skill in the art may make modifications to the specific implementations and application scopes according to the idea of the disclosure. In summary, the content of the specification shall not be construed as a limitation to the disclosure.

## Claims

1. A windshield, comprising an outer glass panel, an intermediate layer, and an inner glass panel, wherein the outer glass panel has a first surface and a second surface opposite to each other, the inner glass panel has a third surface and a fourth surface opposite to each other, the second surface and the third surface face towards each other, and the intermediate layer is connected between the second surface and the third surface;

the windshield is provided with a weakened region, wherein the weakened region comprises a first weakened region, the first weakened region is configured to be tested by an adult-headform impactor, and the first weakened region is configured to achieve a first head injury criterion (HIC) value HIC1 within a time period of 0 to 15 milliseconds (ms) after a moment at which the first weakened region is impacted by the adult-headform impactor; and

the weakened region further comprises a second weakened region, the second weakened region is configured to be tested by the adult-headform impactor, and the second weakened region is configured to achieve a second HIC value HIC2 within a time period of 0 to 15 ms after a moment at which the second weakened region is impacted by the adult-headform impactor;

wherein HIC1 < HIC2 and HIC2 < 1000.

2. The windshield of claim 1, wherein the windshield is configured to be mounted on a vehicle comprising an instrument panel, the first weakened region is fractured by impact from the adult-headform impactor, and the instrument panel is impacted by the adult-headform impactor after the first weakened region is fractured;

the first weakened region is configured to achieve a HIC value HIC11 within a time period of 0 to 5 ms after the moment at which the first weakened region is impacted by the adult-headform impactor; and
the first weakened region is configured to achieve a HIC value HIC12 within a time period of 5 to 15 ms after the moment at which the first weakened region is impacted by the adult-headform impactor;
wherein when HIC12 is less than or equal to HIC11, HIC1 is equal to HIC11; and when HIC12 is greater than HIC11, HIC1 is equal to HIC12.

3. The windshield of claim 2, wherein $100 \leq HIC11 \leq 650$.

4. The windshield of claim 2, wherein $200 \leq HIC11 \leq 500$.

5. The windshield of claim 1, wherein $100 < HIC2 \leq 900$.

6. The windshield of claim 1, wherein the windshield comprises a light-transmitting region and a light-shielding region surrounding the light-transmitting region, a visible light transmittance of the light-transmitting region is greater than or equal to 70%, a visible light transmittance of the light-shielding region is less than or equal to 10%, and both the first weakened region and the second weakened region of the weakened region are located within the light-transmitting region.

7. The windshield of claim 6, wherein the light-shielding region comprises a top light-shielding region, a left light-shielding region, a bottom light-shielding region, and a right light-shielding region;

the weakened region comprises an upper boundary and a lower boundary opposite to each other, as well as a left boundary and a right boundary disposed opposite to each other between the upper boundary and the lower boundary; and
a distance between the lower boundary of the weakened region and the bottom light-shielding region is x, a distance between the left boundary of the weakened region and the left light-shielding region is $m,$ a distance between the right boundary of the weakened region and the right light-shielding region is n, and a distance between the upper boundary of the weakened region and the top light-shielding region is $y,$ wherein x is less than or equal to 15 mm, $m$ is less than or equal to 15 mm, $n$ is less than or equal to 15 mm, and $y$ is less than or equal to 50 mm.

8. The windshield of claim 7, wherein a distance between a lower boundary of the first weakened region and the bottom light-shielding region is equal to x, a distance between a left boundary of the first weakened region and the left light-shielding region is equal to $m,$ a distance between a right boundary of the first weakened region and the right light-shielding region is equal to n, and a distance between an upper boundary of the first weakened region and the lower boundary of the first weakened region is $h,$ wherein $h$ ranges from 100 mm to 300 mm; and
a distance between an upper boundary of the second weakened region and the top light-shielding region is equal to $y,$ a distance between a left boundary of the second weakened region and the left light-shielding region is equal to $m$, and a distance between a right boundary of the second weakened region and the right light-shielding region is equal to $n.$

9. The windshield of claim 8, wherein a transition weakened region is disposed between a lower boundary of the second weakened region and the upper boundary of the first weakened region, an area of the transition weakened region is smaller than an area of the first weakened region, the transition weakened region is configured to be tested by the adult-headform impactor, and the transition weakened region is configured to achieve a third HIC value HIC3 within a time period of 0 to 15 ms after a moment at which the transition weakened region is impacted by the adult-headform impactor, wherein HIC3 is greater than HIC1 and less than HIC2.

10. The windshield of claim 7, wherein the weakened region further comprises a third weakened region, the third weakened region is implemented as two third weakened regions, and the two third weakened regions are respectively disposed on a left side and a right side of the weakened region;

> the second weakened region is located between the two third weakened regions, and the first weakened region is located below the second weakened region and the two third weakened regions;
> a distance between an upper boundary of each of the two third weakened regions and the top light-shielding region is equal to $y$, a distance between a left boundary of the third weakened region at the left side and the left light-shielding region is equal to $m$, a distance between a right boundary of the third weakened region at the right side and the right light-shielding region is equal to $n$, and a distance between a left boundary and a right boundary of each of the two third weakened regions is $d$, wherein $d$ ranges from 50 mm to 300 mm; and
> the third weakened region is configured to be tested by the adult-headform impactor, and the third weakened region is configured to achieve a fourth HIC value HIC4 within a time period of 0 to 15 ms after a moment at which the third weakened region is impacted by the adult-headform impactor, wherein HIC4 is greater than HIC1 and less than HIC2.

11. The windshield of claim 2, wherein the first weakened region is configured to cause the adult-headform impactor to have a first maximum resultant acceleration $a5$ within a time period of 0 to 5 ms after the moment at which the first weakened region is impacted by the adult-headform impactor, and the first weakened region is configured to cause the adult-headform impactor to have a second maximum resultant acceleration $a15$ within a time period of 5 to 15 ms after the moment at which the first weakened region is impacted by the adult-headform impactor, wherein $a5$ is greater than $a15$.

12. The windshield of claim 11, wherein $a5$ is less than or equal to 180 $g$, and $a15$ is less than or equal to 100 $g$.

13. The windshield of claim 11, wherein within the time period of 0 to 15 ms after the moment at which the first weakened region is impacted by the adult-headform impactor, a time duration during which the adult-headform impactor has a resultant acceleration $a$ greater than 50 $g$ is less than or equal to 3 ms.

14. The windshield of claim 6, wherein a ratio of an area of the first weakened region to an area of the light-transmitting region is less than or equal to 1/3, a ratio of an area of the second weakened region to the area of the light-transmitting region is less than or equal to 2/3, and the area of the first weakened region is smaller than the area of the second weakened region.

15. The windshield of any one of claims 1 to 14, wherein a bending strength of the third surface is greater than a bending strength of the second surface, and/or a bending strength of the fourth surface is greater than the bending strength of the second surface.

16. The windshield of any one of claims 1 to 14, wherein a thickness of part of the intermediate layer located in the first weakened region ranges from 0.38 mm to 0.6 mm.

17. The windshield of any one of claims 1 to 14, wherein a moisture content of the intermediate layer ranges from 0.3% to 0.4% or from 0.6% to 0.7%.

18. The windshield of any one of claims 1 to 14, wherein a concentration of tin oxide on the second surface is greater than a concentration of tin oxide on the first surface, and a concentration of tin oxide on the third surface is greater than a concentration of tin oxide on the fourth surface; or
the concentration of tin oxide on the first surface is greater than the concentration of tin oxide on the second surface, and the concentration of tin oxide on the fourth surface is greater than the concentration of tin oxide on the third surface.

19. The windshield of any one of claims 1 to 14, wherein a ratio of a thickness of the outer glass panel to a thickness of the inner glass panel is greater than or equal to 0.75 and less than 1.

20. The windshield of any one of claims 1 to 14, wherein a weakening coating is further provided on at least one of the second surface, the third surface, and the fourth surface, and the weakening coating covers at least the first weakened region.

21. A manufacturing method for a windshield, wherein the manufacturing method is used to manufacture the windshield of any one of claims 1 to 20, and comprises:

step 1: providing a curved outer glass panel and a curved inner glass panel, wherein the outer glass panel has the first surface and the second surface opposite to each other, and the inner glass panel has the third surface and the fourth surface opposite to each other;

step 2: providing the intermediate layer, and the outer glass panel, the intermediate layer, and the inner glass panel are sequentially stacked to form a laminated glass structure; and

step 3: heating, vacuumizing and/or applying pressure to the laminated glass structure to obtain the windshield, wherein the windshield has the weakened region, and the weakened region comprises the first weakened region and the second weakened region.

22. The manufacturing method of claim 21, wherein part of the outer glass panel and/or part of the inner glass panel located in the weakened region is weakened by at least one of the following methods:

(1) introducing an internal flaw between the first surface and the second surface by a laser weakening method;
(2) introducing an internal flaw between the third surface and the fourth surface by the laser weakening method;
(3) forming a microcrack on the second surface by a physical-friction weakening method; and
(4) forming a fractured line on the second surface by a chemical-etching weakening method.

23. The manufacturing method of claim 21, wherein the curved outer glass panel and the curved inner glass panel are obtained by performing a heating and softening process, a bending process, and an annealing process on flat glass, and the heating and softening process, the bending process, and the annealing process satisfy at least one of the following conditions:

(1) a heating temperature ranges from 660°C to 750°C during the heating and softening process;
(2) a convection heating method is adopted to soften the flat glass during the heating and softening process;
(3) the convection heating method and a radiant heating method are both adopted to soften the flat glass during the heating and softening process;
(4) a surface of the flat glass with a lower concentration of tin oxide faces a heating element during the heating and softening process;
(5) a heating and softening time for the outer glass panel is longer than a heating and softening time for the inner glass panel during the heating and softening process;
(6) a temperature of a bending mold for bending the flat glass is greater than or equal to 500°C during the bending process;
(7) a blowing pressure applied to the outer glass panel is lower than a blowing pressure applied to the inner glass panel during the annealing process; and
(8) an annealing time for the outer glass panel is longer than an annealing time for the inner glass panel during the annealing process.

24. A vehicle, comprising an instrument panel and the windshield of any one of claims 1 to 20, wherein the instrument panel is disposed adjacent to a lower side of the windshield.

FIG. 1

FIG. 2

EP 4 782 238 A1

FIG. 3

FIG. 4

FIG. 5

FIG. 6

FIG. 7

FIG. 8

PROVIDING CURVED OUTER GLASS PANEL 131 AND CURVED INNER GLASS PANEL 132, OUTER GLASS PANEL 131 HAS FIRST SURFACE 1311 AND SECOND SURFACE 1312 OPPOSITE TO EACH OTHER, AND INNER GLASS PANEL 132 HAS THIRD SURFACE 1321 AND FOURTH SURFACE 1322 OPPOSITE TO EACH OTHER — S1

PROVIDING INTERMEDIATE LAYER 133, AND OUTER GLASS PANEL 131, INTERMEDIATE LAYER 133, AND INNER GLASS PANEL 132 ARE SEQUENTIALLY STACKED TO FORM LAMINATED GLASS 13 STRUCTURE — S2

HEATING, VACUUMIZING, AND/OR APPLYING PRESSURE TO LAMINATED GLASS 13 STRUCTURE TO OBTAIN WINDSHIELD 1, WINDSHIELD 1 HAS WEAKENED REGION, AND WEAKENED REGION INCLUDES FIRST WEAKENED REGION 121 AND SECOND WEAKENED REGION 122. — S3

FIG. 9

FIG. 10

## INTERNATIONAL SEARCH REPORT

| International application No. |
| --- |
| **PCT/CN2024/126912** |

**A.    CLASSIFICATION OF SUBJECT MATTER**

B60J1/02(2006.01)i

According to International Patent Classification (IPC) or to both national classification and IPC

**B.    FIELDS SEARCHED**

Minimum documentation searched (classification system followed by classification symbols)

IPC: B60J

Documentation searched other than minimum documentation to the extent that such documents are included in the fields searched

Electronic data base consulted during the international search (name of data base and, where practicable, search terms used)

CNTXT, DWPI, ENTXTC, VEN, CNKI: 玻璃, 头部伤害标准, 头部伤害指标, 弱化, 过渡, glass, HIC, weaken+, transition

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 117341446 A (FUYAO GLASS INDUSTRY GROUP CO., LTD.) 05 January 2024 (2024-01-05) claims 1-24 | 1-24 |
| X | JP 2005219726 A (SEKISUI CHEMICAL CO., LTD.) 18 August 2005 (2005-08-18) description, paragraphs [0013]-[0026] and [0044]-[0055], and figures 1-2 | 1-8, 10-24 |
| Y | JP 2005219726 A (SEKISUI CHEMICAL CO., LTD.) 18 August 2005 (2005-08-18) description, paragraphs [0013]-[0026] and [0044]-[0055], and figures 1-2 | 9 |
| Y | CN 115448583 A (FUYAO GLASS INDUSTRY GROUP CO., LTD.) 09 December 2022 (2022-12-09) description, paragraphs [0088]-[0099], and figures 4-6 | 9 |
| A | WO 2019245819 A1 (CORNING INC.) 26 December 2019 (2019-12-26) description, paragraphs [0043]-[0109], and figures 1-13 | 21-23 |
| A | CN 109016739 A (CORNING INC.) 18 December 2018 (2018-12-18) entire document | 1-24 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **31 December 2024** | **13 January 2025** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/126912** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 115476556 A (FUYAO GLASS INDUSTRY GROUP CO., LTD.) 16 December 2022 (2022-12-16)<br>entire document | 1-24 |
| A | CN 116512705 A (ANHUI WANWEI UPDATED HIGH-TECH MATERIAL INDUSTRY CO., LTD.) 01 August 2023 (2023-08-01)<br>entire document | 1-24 |
| A | US 2017225435 A1 (SEKISUI CHEMICAL CO., LTD.) 10 August 2017 (2017-08-10)<br>entire document | 1-24 |

Form PCT/ISA/210 (second sheet) (July 2022)

**INTERNATIONAL SEARCH REPORT**
Information on patent family members

International application No.

**PCT/CN2024/126912**

| Patent document cited in search report | | | Publication date (day/month/year) | Patent family member(s) | | | Publication date (day/month/year) |
|---|---|---|---|---|---|---|---|
| CN | 117341446 | A | 05 January 2024 | None | | | |
| JP | 2005219726 | A | 18 August 2005 | JP | 4644440 | B2 | 02 March 2011 |
| CN | 115448583 | A | 09 December 2022 | None | | | |
| WO | 2019245819 | A1 | 26 December 2019 | None | | | |
| CN | 109016739 | A | 18 December 2018 | TW | 201509852 | A | 16 March 2015 |
| | | | | TWI | 649286 | B | 01 February 2019 |
| | | | | JP | 2016530190 | A | 29 September 2016 |
| | | | | EP | 3046761 | A1 | 27 July 2016 |
| | | | | JP | 2020128331 | A | 27 August 2020 |
| | | | | WO | 2015006201 | A1 | 15 January 2015 |
| | | | | JP | 2022046543 | A | 23 March 2022 |
| | | | | JP | 2022120162 | A | 17 August 2022 |
| | | | | KR | 20160030253 | A | 16 March 2016 |
| CN | 115476556 | A | 16 December 2022 | None | | | |
| CN | 116512705 | A | 01 August 2023 | None | | | |
| US | 2017225435 | A1 | 10 August 2017 | MX | 2017003991 | A | 07 July 2017 |
| | | | | KR | 20170063432 | A | 08 June 2017 |
| | | | | WO | 2016052672 | A1 | 07 April 2016 |
| | | | | US | 10421255 | B2 | 24 September 2019 |
| | | | | JPWO | 2016052672 | A1 | 13 July 2017 |
| | | | | JP | 6801960 | B2 | 16 December 2020 |
| | | | | EP | 3202740 | A1 | 09 August 2017 |
| | | | | EP | 3202740 | A4 | 18 April 2018 |
| | | | | RU | 2017115010 | A | 09 November 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023113844464